# EUROPEAN PATENT APPLICATION

(11) **EP 1 847 591 A1**
(43) Date of publication of application: **24.10.2007**
(21) Application number: 05772570.7
(22) Date of filing: 18.05.2005
(51) Int. Cl.: C12C 13/00

(54) **DEVICE FOR FINALLY FERMENTING AND/OR STORING AND/OR TRANSPORTING AND/OR DISPENSING BEER**

(30) Priority: 19.01.2005 RU 2005101053
(71) Applicant: Fifth Ocean Engineering Limited, Nicosia (CY)
(72) Inventor: MATVEEV, Vladimir Gennadievich, Moscow, 117526 (RU); ARTAMONOV, Yury Vasilievich, Bryansk, 242020 (RU); PESHKIN, Andrei Arkadievich, Moscow, 125080 (RU); YAKOVLEV, Pavel Alexandrovich, Moscow, 123060 (RU)
(74) Representative: Hano, Christian
(86) International application number: PCT/RU2005/000275
(87) International publication number: WO 2006/078188

(57) **Abstract**

The invention relates to food industry. In order to ensure the process temperature conditions of a device for finally fermenting and/or storing and/or transporting and/or dispensing beer is provided with a cooling unit which is embodied in such a way that it cools a liquid supplied to a cooling jacket, is arranged inside a protective housing or outside thereof and is rigidly connected thereto.

## Description

### Field of the invention

The invention relates to a food industry, is applicable to units for after-fermentation of low power brewing devices and can be used in organizing a production, storing, delivery and dispensing of nonfiltered beer.

### Background of the invention

A unit for after-fermentation is known containing an isothermal vessel with a cooling jacket being used in a device for producing beer (see patent SU 1817791, Cl. C12C 13/00, 12.03.92). However, the structure of the known device is of a stationary type which makes impossible to use it for operational delivery of nonfiltered beer to points of its dispense and/or realization and requires additional operations for filling and packing.

The closest prior art to the claimed unit in respect of a technical essence is the unit for after-fermentation of beer containing an isothermal vessel with a cooling jacket and with a housing being capable of operational connection and disconnection as well as transportation with finished beer to a point of its dispense and/or to a point of its realization, or with beer at the stage of after-fermentation to another place of after-fermentation with the possibility for its dispense and/or realization (see Russian patent Nº 2171834, Cl. C12C 13/00, 09.11.2000).

However, the known unit does not provide a temperature technological regime at after-fermentation and/or transportation, storing and/or dispense in points of its dispense and/or realization in which one is absent a stationary cooling system, besides, in the known unit is not provided cooling of a delivery section (a beer pipeline) from the unit to a valve for dispensing beer.

### Disclosure of the invention

The basis of the invention is the problem of provision of a temperature technological regime at after-fermentation and/or transportation, and/or storing, and/or dispense in points of its dispense and/or realization, as well as provision of a temperature technological regime of a delivery section of beer (a beer pipeline) from the unit to a valve for dispensing beer.

The problem is solved in that a unit for after-fermentation and/or storing, and/or transportation, and/or dispense of beer containing a vessel with a cooling jacket being covered with a thermal insulation and being disposed inside a protective housing, according to the invention, it contains a cooling unit being capable to provide cooling of liquid entering the cooling jacket, the cooling unit is mounted inside the protective housing or disposed outside the protective housing and is rigidly connected with it.

Besides, the cooling unit contains a compressor-condensator unit whose evaporator is disposed in a thermo-insulated vessel through which by means of a pump is provided a flow of liquid to be cooled along a closed loop through the cooling jacket. Besides, the unit is provided with communications for dispensing beer and functional valves and joints for operational connection and disconnection with them being communicated by corresponding pipelines to an inner space of the vessel and the cooling unit, the communications for dispensing beer are provided with a cooling loop disposed along their length and coupled through the pump with the cooling unit, the above communications and the loop are embraced with a common thermo-insulated housing.

The essence of technical solution is in the fact that the implementation of the proposed unit in the above mentioned manner makes possible to provide a necessary temperature technological regime as at after-fermentation and at transportation, as well as at storing and/or dispense in points of its dispense and/or realization in which one are absent cooling systems.

### Brief description of drawings

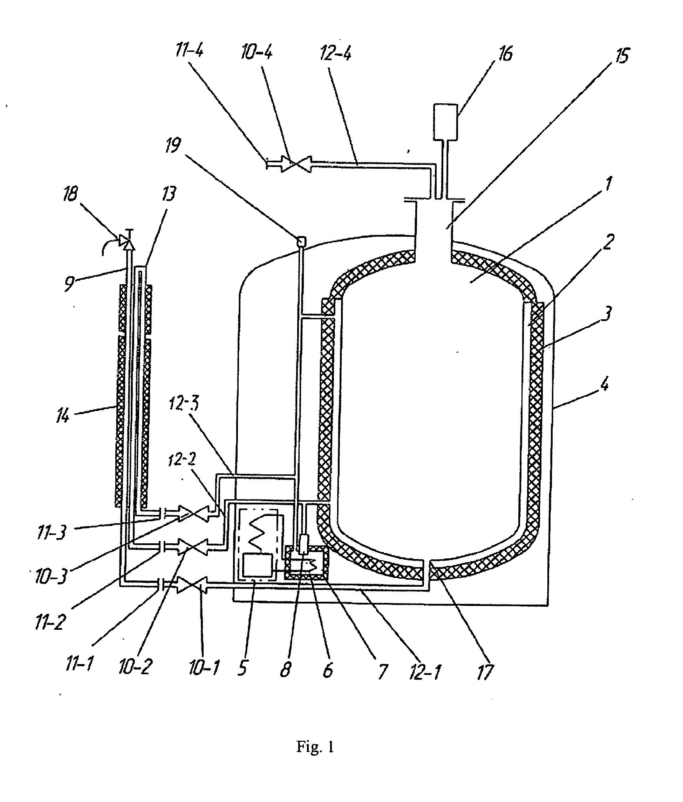

Fig.1 shows the structure of the proposed unit.

### Best mode of carrying out the invention

The unit for after-fermentation and/or storing, and/or transportation, and/or dispense of beer contains a vessel 1 with a cooling jacket 2 being covered with a thermal insulation 3 and being disposed inside a protective housing 4. The unit further contains a cooling unit being capable to provide cooling of liquid entering the cooling jacket 2, and containing a compressor-condensator unit 5 whose evaporator 6 is disposed in a thermo-insulated vessel 7 through which by means of a pump 8 is provide a flow of liquid to be cooled along a closed loop through the cooling jacket 2.

The cooling unit may be mounted inside the protective housing 4 or be mounted outside the protective housing 4 and is rigidly connected with it.

The unit is provided with communications 9 for dispensing beer and with functional valves 10-1...10-4 and joints 11-1...11-4 for operational connection and disconnection with them being communicated by corresponding pipelines 12-1...12-4 to the inner space of the vessel 1 and the cooling unit.

The communications 9 for dispensing beer (their delivery section - a pipeline) are provided with the cooling loop 13 disposed along their length and coupled through the pump 8 with the cooling unit. The above communications 9 and the loop 13 are embraced with the common thermo-insulated housing 14.

The vessel 1 has a neck 15 with a cover on which is mounted a pressure gauge 16 which communicates with an upper part of the inner space of the vessel 1, as well as has an opening for the pipeline 12-4 of the supercharging for supporting inner pressure in the vessel 1. On other end of the pipeline 12-4 is provided a functional valve 10-4 with a joint 11-4 for operational connection, for example, with a gas tank for supercharging. In lower part of the vessel 1 is provided the opening 17 for the pipeline 12-1 for filling (pouring in) or dumping (pouring out) a product (green beer or finished beer) through a functional valve 10-1 and a joint 11-1. To the joint 11-1 in points of dispense and/or realization are linked the communications 9 for dispensing beer having a valve 18 at beer output. Besides, when linking the communications 9 for dispensing beer the cooling loop 13 is linked with help of joints 11-2 and 11-3 which through valves 10-2 and 10-3 as well as through pipelines 12-2 and 12-3 are connected with the thermo-insulated vessel 7 accordingly, and by means of the pump 8 is provided the flow of liquid to be cooled into the cooling jacket 2 and the loop 13.

The loop for the cooling jacket 2 and the loop 13 for cooling the communications 9 for dispensing beer are filled beforehand with liquid through the opening of the pipeline which joins up the loops when a stopper 19 is removed at its end.

Thus, the claimed unit is made capable of operational connection and disconnection as well as transportation with finished nonfiltered beer to the point of dispense and/or to the point of its realization, or with beer being at a stage of after-fermentation to another place of after-fermentation with the possibility for its dispense and/or realization providing a guarantee of preserving its taste properties.

Besides, the opportunity is offered to transport the unit at long distances and to store it for a relatively long time with out using additional external sources of cooling.

The unit operates in the following manner.

Before filling the unit with green beer for after-fermentation all product spaces must be disinfected and carefully cleaned.

After filling, for example, through the opening 17 the unit is hermetically closed (rabbeted), and takes place a cooling to the temperature of 0... +2°C of green beer which has subjected to technological process of main fermentation. To the valve 10-4 for supercharging and gas disposal through the joint 11-4 is linked the gas tank with acid gas and a pressure regulator (not shown on Fig.1).

The technological process of after-fermentation takes place at a gauge pressure in the vessel 1 which is provided by an acid gas in process of its release at after-fermentation of beer, or if necessary, through the pipeline 12-4 of supercharging from a separate source - the gas tank and at the temperature of 0...+2°C of beer which is supported with the cooled circulated liquid, for example, water from the thermo-insulated vessel 7 of the cooling unit due to operation of switched-on pump 8 feeding it through the loop of the cooling jacket 2.

The liquid is cooled with the evaporator 6, for example, a freon evaporator being built-in into the thermo-insulated vessel 7, freon feed and heat removal is performed with the compressor-condensator unit 5.

At this temperature ripens beer during several weeks up to full readiness being saturated with a soluble acid gas at a certain pressure which is monitored with the pressure gauge 16.

After ripening beer the unit with ready product may be stored or transported to the point of dispense and/or realization.

In case of long terms of transportation the cooling of beer in the unit may be continued with switching-on the pump 8 and the compressor-condensator unit 5 of the cooling unit, for example, from transport means.

When storing beer or its realization and/or dispense the unit is linked to a local electric power supply for provision of operation of the cooling unit. Besides, are linked the communications 9 for dispensing and the gas tank for supercharging.

After linking the joints 11-1...11-4 the valves 10-1...10-4 are opened feeding beer through the communications 9 for dispense to the valve 18 for dispensing beer and cooling the loops with circulating liquid from the cooling unit. When outputting beer a constant pressure in the vessel 1 is supported due to its supercharging through the pipeline 12-4. The cooling unit provides cooling of beer in the vessel 1 during all time of its realization even in case when the valve 18 is closed.
Thus, is solved the raised technical problem in the proposed unit.

### Industrial applicability

The said advantages of the proposed unit provide the possibility of broad usage in the food industry, especially, when organizing a production, storage, delivery and dispense of nonfiltered beer.

## Claims

1. A unit for after-fermentation and/or storing and/or transportation and/or dispensing beer containing a vessel (1) with a cooling jacket (2) being covered with a thermal insulation (3) and being disposed inside a protective housing (4), **characterized in that** it contains a cooling unit being capable to provide cooling of liquid entering the cooling jacket (2), the cooling unit is mounted inside the protective housing (4) or disposed outside the protective housing (4) and is rigidly connected with it.

2. The unit according to claim 1, **characterized in that** the cooling unit contains a compressor-condensator unit (5) whose evaporator (6) is disposed in a thermo-insulated vessel (7) through which by means of a pump (8) is provided a flow of liquid to be cooled along a closed loop through the cooling jacket (2).

3. The unit according to claim 1 and/or 2, **characterized in that** the unit is provided with communications (9) for dispensing beer and functional valves (10-1...10-4) and joints (11-1...11-4) for operational connection and disconnection with them being communicated by corresponding pipelines (12-1...12-4) to an inner space of the vessel (1) and the cooling unit.

4. The unit according to claim 3, **characterized in that** the communications (9) for dispensing beer are provided with a cooling loop (13) disposed along their length and coupled trough the pump (8) with the cooling unit, the above communications (9) and the loop (13) are embraced with a common thermo-insulated housing (14).
